(19) Europäisches Patentamt
European Patent Office
Office européen des brevets

(11) Publication number: **0 063 753**
**B1**

(12) **EUROPEAN PATENT SPECIFICATION**

(45) Date of publication of patent specification: **16.07.86**

(51) Int. Cl.$^4$: **C 08 L 57/04,** C 08 L 43/04

(21) Application number: **82103184.6**

(22) Date of filing: **15.04.82**

(54) **One-pack composition comprising a silyl group containing vinyl type polymer.**

(30) Priority: **17.04.81 JP 59002/81**

(43) Date of publication of application:
**03.11.82 Bulletin 82/44**

(45) Publication of the grant of the patent:
**16.07.86 Bulletin 86/29**

(84) Designated Contracting States:
**BE DE FR GB IT**

(56) References cited:
**EP-A-0 007 765**
**EP-A-0 044 049**
**EP-A-0 050 248**
**EP-A-0 050 249**
**US-A-4 043 953**

(73) Proprietor: **KANEGAFUCHI KAGAKU KOGYO KABUSHIKI KAISHA**
**2-4 Nakanoshima 3-chome**
**Kita-ku Osaka-shi Osaka-fu (JP)**

(72) Inventor: **Kato, Yasushi**
**1-11-3, Katayama-cho Nagata-ku**
**Kobe-shi Hyogo-ken (JP)**
Inventor: **Furukawa, Hisao**
**122-402, 1-2, Hiyodoridai Kita-ku**
**Kobe-shi Hyogo-ken (JP)**

(74) Representative: **Vossius Vossius Tauchner Heunemann Rauh**
**Siebertstrasse 4 P.O. Box 86 07 67**
**D-8000 München 86 (DE)**

**EP 0 063 753 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a composition which comprises a silyl group containing polymer in which the backbone is substantially composed of a vinyl type polymer chain and which contains at least one silicon atom attached to a hydrolyzable group at the terminal or in a side chain in the molecule (A), a curing catalyst (B) and a solvent (C), and which is curable at low temperatures by atmospheric moisture.

Various silicon compounds containing a silicon atom attached to a hydrolyzable group are known and since they have good adhesion to inorganic substances by the hydrolyzable silyl group and can crosslink at ambient temperature by moisture, especially atmospheric moisture, to form cured products having excellent durability, they are extensively employed as paints, coating agents, adhesives, sealants, silane coupling agents etc.

However, since these silicon compounds containing a silicon atom attached to a hydrolyzable group, when used without a curing catalyst, are slow in curing speed at room temperature or at relatively moderately elevated temperatures, a high degree of heating is necessary when curing of the coating at a high speed is required, and therefore an enormous amount of energy is needed. As one improvement of such a disadvantage, a curing catalyst could be incorporated just prior to use in order to enhance the curing speed of the coating at relatively low temperatures; however, such a paint, coating agent, adhesive, sealant or coupling agent once added with a curing catalyst, cannot be stored because it cures in a short time and, for example, when a part has been used as a paint, the rest is just wasted. Such compositions are generally called two-pack types. On the other hand, a composition already incorporating a curing catalyst and having no need to be combined with another composition just prior to use is called a one-pack type. As the one-pack type of composition having a high curing speed, there is known a composition comprising a silicon compound in which the backbone having hydrolyzable silyl groups is composed of siloxane bonds, and a curing catalyst.

According to EP—A—7765, copolymers of ethylenically unsaturated organic monomers and unsaturated organosilane monomers are stabilized against viscosity increase and gelation by the addition thereto of a monomeric hydrolytically reactive compound chosen from the group consisting of

(i) monomeric hydrolytically reactive organosilanes and

(ii) trialkyl orthoformates; and an alkyl alcohol.

According to US—A—4,043,953, the potlife of an ambient temperature moisture-curable coating composition comprising an acrylic-silane interpolymer and a cure-accelerating catalyst is increased by the addition to the composition of from about 0.5 percent to about 15 percent by weight of interpolymer solids of a monomeric hydrolytically reactive organosilicon compound represented by the structural formula:

$$X_nSi(OR)_{4-n}$$

wherein X is an organic radical having from 1 to 12 carbon atoms, R is methyl, ethyl, 2-methoxyethyl, 2-ethoxyethyl, or an acyl group containing 5 or less carbon atoms and n is 0, 1 or 2.

In EP—A—44049 which is not prepublished a paint comprising a silyl group-containing vinyl resin having a main chain composed substantially of a vinyl polymer is described. The resin has at least one silyl group bonded to a hydrolyzable group, and contains 0.1 to 20% by weight of maleic anhydride by copolymerization. The resin has a molecular weight of 300 to 30,000.

It is the object of the present invention to provide a stabilized one-pack composition comprising a silyl group containing vinyl polymer having active hydrogen atoms as a copolymerization component and having a molecular weight of 1,000 to 30,000. This object is surprisingly achieved by using specific organic tin compounds as a curing catalyst together with a hydrolyzable ester and/or an alkyl alcohol as solvent.

The subject matter of the invention therefore is a one-pack composition which is curable at low temperatures by atmospheric moisture comprising a mixture of (A) 100 parts by weight of a silyl group containing resin in which the backbone is substantially composed of a vinyl polymer chain and which contains at least one silicon atom attached to a hydrolyzable group at a terminal or in a side chain of its molecule; (B) 0.1 to 10 parts by weight of a curing catalyst; and (C) a solvent; characterized in that said curing catalyst is selected from the group consisting of a carboxylic acid type organic tin compound, a mercaptide type organic tin compound having an Sn—S bond and a sulfide type organic tin compound having an Sn=S bond; said solvent comprises a hydrolyzable ester and/or an alkyl alcohol; and said silyl group-containing resin (A) has a molecular weight of between 1,000 and 30,000 and contains an ethylenically unsaturated organic monomer containing active hydrogen as a copolymerization component.

The composition according to the present invention shows good workability in the painting stage, excellent weather resistance after coating and curing, and high hardness of the coated surface.

The resin used in this invention is one in which the backbone is substantially composed of a vinyl type polymer chain and which contains at least one, and preferably 2 or more, silyl groups attached to hydrolyzable groups at the terminals or in side chains in the molecule, and most of the silyl groups are represented bv

$$X_n\text{—}\overset{(R_1)_{3-n}}{\overset{|}{Si}}\text{———}\overset{R_2}{\overset{|}{CH}}\text{—}$$

wherein X is a hydrolyzable group, $R_1$ and $R_2$ are each hydrogen or an alkyl group, aryl group or aralkyl group of 1—10 carbon atoms, and n is an integer of 1, 2 or 3.

Examples of the hydrolyzable group include halogen, alkoxy, acyloxy, ketoxymate (R(R')C=NO—), amino, acid amino, aminoxy, mercapto, alkenyloxy groups etc.

The production of the silyl group containing vinyl type resin according to this invention may be effected in various manners, among which (i) a hydrosilylation reaction using a vinyl type resin having a carbon-carbon double bond and a hydrosilane, and (ii) a copolymerization of a vinyl type compound and a silyl compound having a polymerizable double bond hereinbelow described are industrially advantageous processes. These are more particularly described below.

Process (i)

The silyl group containing vinyl type resin of this invention may be easily produced by reacting a hydrosilane compound with a vinyl type resin having a carbon-carbon double bond in the presence of a catalyst of a Group VIII transition metal. The hydrosilane compound used in this invention is that having the following general formula:

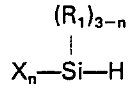

wherein $R_1$ is hydrogen or a monovalent hydrocarbon group selected from an alkyl group, aryl group or aralkyl group having 1—10 carbon atoms, X is a hydrolyzable group, and n is an integer of 1—3.

Specific examples of the hydrosilane compound within this general formula include halogenated silanes such as methyldichlorosilane, trichlorosilane, or phenyldichlorosilane; alkoxysilanes such as methyldiethoxysilane, methyldimethoxysilane, phenyldimethoxysilane, trimethoxysilane, or triethoxysilane; acyloxysilanes such as methyldiacetoxysilane, phenyldiacetoxysilane, or triacetoxysilane and other various silanes such as methyldiaminoxysilane, triaminoxysilane, methyldiaminosilane, triaminosilane, bis(dimethylketoxymate)methylsilane, bis(cyclohexylketoxymate)methylsilane, methyldiisopropenoxysilane, or triisopropenoxysilane.

The amount of the hydrosilane compound used can be any, but is preferably 0.5—2 moles per carbon-carbon double bond contained in the vinyl type resin. Although the use of the silane in an amount beyond this range is not excluded, no benefit is obtained but the unreacted hydrosilane is merely recovered.

Further, a highly reactive halogenated silane which is an inexpensive basic starting material may easily be employed as the hydrosilane compound in this invention. The silyl group containing vinyl type resin obtained by using a halogenated silane, when exposed in air, rapidly cures at ambient temperature while emitting hydrogen chloride, but suffers from such problems as the generation of a pungent odor due to hydrogen chloride and the corrosion of substances in contact with or adjacent to it, and hence it can only be employed in limited practical applications; it is therefore desirable to subsequently further convert the halogen functional group to other hydrolyzable functional groups. For example, it may be converted to alkoxy, acryloxy, aminoxy, amido, acid amido, ketoxymate, mercapto and similar groups according to the method disclosed in Japanese Patent Application Laid-open No. 91546/1979.

The vinyl type resin to be used in Process (i) in this invention is not particularly limited, except that vinyl type resins containing hydroxyl groups are excluded; a resin comprising as the main component a homopolymer or a copolymer selected from the following is suitable: acrylic acid or methacrylic acid esters such as methyl acrylate, methyl methacrylate, ethyl acrylate, ethyl methacrylate, butyl acrylate, butyl methacrylate, 2-ethylhexyl acrylate, or 2-ethylhexyl methacrylate, carboxylic acids such as acrylic acid, methacrylic acid, itaconic acid, or fumaric acid and acid anhydrides such as maleic anhydride; epoxy compounds such as glycidyl acrylate, or glycidyl methacrylate; amino compounds such as diethylaminoethyl acrylate, diethylaminoethyl methacrylate, or aminoethyl vinyl ether; amide compounds such as acrylamide, methacrylamide, itaconic acid diamide, α-ethylacrylamide, crotonamide, fumaric acid diamide, maleic acid diamide, N-butoxymethylacrylamide, or N-butoxymethylmethacrylamide; acrylonitrile, iminol methacrylate which is an aziridinyl compound of the formula:

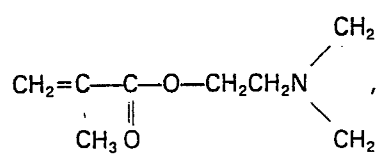

[2-(1-aziridinyl)ethyl methacrylate]

styrene, α-methylstyrene, vinyl chloride, vinyl acetate, or vinyl propionate. For producing a homopolymer or a copolymer of these vinyl compounds, allyl acrylate, allyl methacrylate, diallyl phthalate or the like may be partially radical copolymerized therewith to incorporate a carbon-carbon double bond into the vinyl type resin at the molecule terminal or in a side chain for the hydrosilylation reaction. The amount of the

monomer necessary for this can be determined, depending on the number of silyl groups in the desired resin. Further, the molecular weight may be modified by adding a chain transfer agent such as n-dodecylmercaptan, or t-dodecylmercaptan. Polymerization of these vinyl compounds may be conducted either using or not using a solvent, and, if used, the use of a non-reactive solvent such as an ether, hydrocarbon, or acetic acid ester is preferred.

In this invention, a catalyst of a transition metal complex is required in the stage of reacting the hydrosilane compound with the carbon-carbon double bond. Effectively employed as the transition metal complex catalyst is a complex of a Group VIII transition metal selected from platinum, rhodium, cobalt, palladium and nickel. This hydrosilylation reaction may be effected at any temperature of from 50—150°C, and the reaction time is about 1—10 hours.

Process (ii)

The second process in this invention comprises radical polymerizing a silane compound of the formula:

$$R_3—\overset{\overset{(R_1)_{3-n}}{|}}{Si}—X_n$$

wherein $R_1$ is a monovalent hydrocarbon group selected from an alkyl group, aryl group and aralkyl group having 1—10 carbon atoms, $R_3$ is an organic residue containing a polymerizable double bond, X is a hydrolyzable group, and n is an integer of 1, 2 or 3, with various vinyl type compounds.

Examples of the silane compound used in this invention include:

$$CH_2{=}CH\overset{\overset{CH_3}{|}}{Si}(OCH_3)_2,$$

$$CH_2{=}CH\overset{\overset{CH_3}{|}}{Si}Cl_2,$$

$$CH_2{=}CHSi(OCH_3)_3, \qquad CH_2{=}CHSiCl_3,$$

$$CH_2{=}CHCOO(CH_2)_3\overset{\overset{CH_3}{|}}{Si}(OCH_3)_2,$$

$$CH_2{=}CHCOO(CH_2)_3Si(OCH_3)_3,$$

$$CH_2{=}CHCOO(CH_2)_3\overset{\overset{CH_3}{|}}{Si}Cl_2,$$

$$CH_2{=}CHCOO(CH_2)_3SiCl_3,$$

$$CH_2{=}C(CH_3)COO(CH_2)_3\overset{CH_3}{Si}(OCH_3)_2,$$

$$CH_2{=}C(CH_3)COO(CH_2)_3Si(OCH_3)_3,$$

$$CH_2{=}C(CH_3)COO(CH_2)_3\overset{\overset{CH_3}{|}}{Si}Cl_2,$$

$$CH_2{=}C(CH_3)COO(CH_2)_3SiCl_3$$

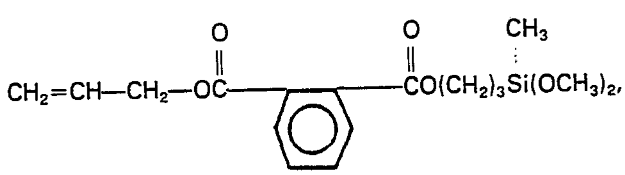

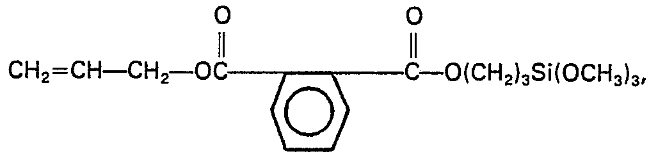

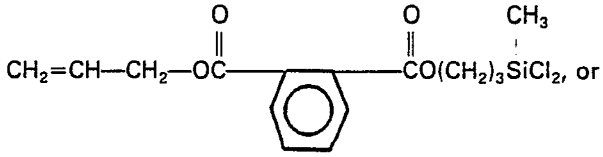

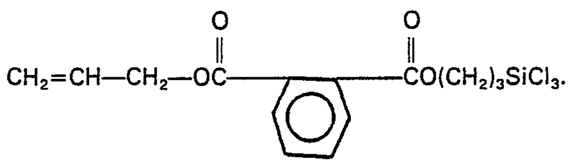

These silane compounds may be synthesized in various manners, for example, by reacting acetylene, allyl acrylate, allyl methacrylate or diallyl phthalate with methyldimethoxysilane, methyldichlorosilane, trimethoxysilane or trichlorosilane in the presence of a catalyst of a Group VIII transition metal.

While the compounds used for the synthesis of the vinyl type resins in the above-described Process (i) may be used as the vinyl type compounds to be used in this process, there may also be employed, in addition to those described under Process (i), such vinyl type compounds containing a hydroxyl group as 2-hydroxyethyl acrylate, 2-hydroxyethyl methacrylate, 2-hydroxypropyl acrylate, 2-hydroxypropyl methacrylate, 2-hydroxyvinyl ether, N-methylol acrylamide, or ARONIX 5700® (an oligoester acrylate produced by Toa Gosei Chemical).

The synthesis of a copolymer of such vinyl type compounds and silane compounds may be carried out by the conventional solution polymerization method. In order to obtain a silyl group containing copolymer having an appropriate molecular weight, the vinyl type compound, the silane compound, a radical initiator, and a chain transfer agent such as n-dodecylmercaptan or t-dodecylmercaptan, according to the necessity, are added and reacted at 50—150°C. A solvent may optionally be used, and, if used, the use of a non-reactive solvent such as an ether, hydrocarbon or acetic acid ester is preferred.

The silyl group containing vinyl type resin thus obtained may be subjected to, e.g. the method disclosed in Japanese Patent Application Laid-open No. 91546/1979, to displace the hydrolyzable group.

Thus, there is obtained a silyl group containing vinyl type resin in which the backbone is substantially composed of a vinyl type polymer and which contains at least one silicon atom attached to a hydrolyzable group at the terminal or in a side chain in the molecule.

The molecular weight of the silyl group containing vinyl type resin used in this invention is in the range of 1,000—30,000 in view of a stability and the physical properties of the cured product. In order to improve the adhesion the silyl group containing vinyl type resin contains incorporated the above-illustrated ethylenically unsaturated organic monomer or monomers containing active hydrogen such as a carboxyl group, a hydroxyl group, an amino group, an amido group etc. as a copolymerization component.

The curing catalyst used in this invention is an organic tin compound, for example, a carboxylic acid type organic tin compound such as

$(n\text{-}C_4H_9)_2Sn(OCOC_{11}H_{23}\text{-}n)_2$,
$(n\text{-}C_4H_9)_2Sn(OCOCH{=}CHCOOCH_3)_2$,
$(n\text{-}C_4H_9)_2Sn(OCOCH{=}CHCOOC_4H_8\text{-}n)_2$,
$(n\text{-}C_8H_{17})_2Sn(OCOC_{11}H_{23}\text{-}n)_2$,
$(n\text{-}C_8H_{17})_2Sn(OCOCH{=}CHCOOCH_3)_2$,
$(n\text{-}C_8H_{17})_2Sn(OCOCH{=}CHCOOC_4H_9\text{-}n)_2$,
$(n\text{-}C_8H_{17})_2Sn(OCOCH{=}CHCOOC_8H_{17}\text{-}iso)_2$, or
$Sn(OCOC_8H_{17}\text{-}n)_2$,

a mercaptide type organic tin compound such as

$(n\text{-}C_4H_9)_2Sn(SCH_2COO)$,
$(n\text{-}C_4H_9)_2Sn(SCH_2COOC_8H_{17}\text{-}iso)_2$,
$(n\text{-}C_8H_{17})_2Sn(SCH_2COO)$,
$(n\text{-}C_8H_{17})_2Sn(SCH_2CH_2COO)$,
$(n\text{-}C_8H_{17})_2Sn(SCH_2COOCH_2CH_2OCOH_2S)$,
$(n\text{-}C_8H_{17})_2Sn(SCH_2COOCH_2CH_2CH_2CH_2OCOH_2S)$,
$(n\text{-}C_8H_{17})_2Sn(SCH_2COOC_8H_{17}\text{-}iso)_2$,
$(n\text{-}C_8H_{17})_2Sn(SCH_2COOC_{12}H_{25}\text{-}n)_2$, or

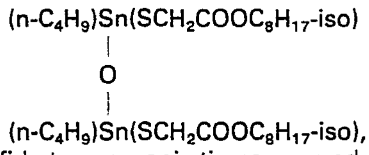

or a sulfide type organic tin compound such as

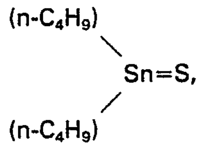

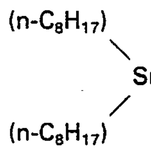

or

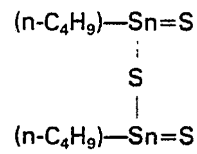

The curing catalyst is employed in an amount 5alyst is employed in an amount of 0.1—10 parts by weight, preferably 0.1—8 parts by weight, per 100 parts by weight of the silyl group containing vinyl type resin.

The solvent used in this invention comprises a hydrolyzable ester and/or an alkyl alcohol in order to enhance the stability of the one-pack composition.

As the alkyl alcohol, an alcohol having 1—10 carbon atoms in the alkyl is preferred, and there are employed methyl alcohol, ethyl alcohol, n-propyl alcohol, isopropyl alcohol, n-butyl alcohol, isobutyl alcohol, sec-butyl alcohol, tert-butyl alcohol, n-amyl alcohol, isoamyl alcohol, hexyl alcohol, octyl alcohol, cellosolve etc.

As the hydrolyzable ester, there may be employed trialkyl orthoformates such as trimethyl orthoformate, triethyl orthoformate, tripropyl orthoformate, tributyl orthoformate etc., and tetraalkyl orthosilicates such as tetramethyl orthosilicate, tetraethyl orthosilicate, tetrapropyl orthosilicate, tetrabutyl orthosilicate etc.; and hydrolyzable organic silicon compounds of the formula: $R_{4-n}SiX_n$ wherein X is a hydrolyzable group, R is a monovalent organic group optionally containing a functional group, and n is an integer of 1—4, preferably 3 or 4, such as ethyl silicate 40, methyltrimethoxysilane, methyltriethoxysilane, ethyltrimethoxysilane, ethyltriethoxysilane, phenyltrimethoxysilane, phenyltriethoxysilane, vinyltrimethoxysilane, vinyltriethoxysilane, γ-methacryloxypropyltrimethoxysilane, γ-mercaptopropyltrimethoxysilane etc., and partial hydrolyzates thereof.

The amount of the solvent may vary depending on the molecular weight or composition of the silyl group containing vinyl type resin and is employed according to the solids concentration or viscosity required in actual use.

In addition, it is also possible to enhance the adhesion by adding a compound having at least one silicon atom attached to a hydrolyzable group in the molecule, such as a silane coupling agent or a reaction product thereof, to the composition of this invention.

Since the one-pack compositions of this invention can cure at ambient temperature or low temperatures and the cured products have excellent properties such as adhesion, weather resistance etc., they are useful as paints, coating agents, primers, adhesives etc. for surfaces of inorganic substances (e.g. iron plates, tinplates, galvanized plates, aluminum plates, zinc steel plates, tiles, slate plates etc.) and organic substances (e.g. wood, paper, cellophane, plastics, coats of organic paints etc.). Especially, because of their capability of curing at low temperatures, they are also useful as paints for protection against corrosion of bridges etc., face coatings, paints for repairing automobiles, paints for organic substance surfaces, etc.

Furthermore, they may be blended with various resins currently employed as paints, coating agents, primers, adhesives etc., and, for example, they may be mixed in appropriate proportions with lacquer type paints, acryl lacquer type paints, thermosetting acrylic paints, alkyd paints, melamine paints, epoxy type paints etc., and can improve physical properties, e.g. adhesion, weather resistance etc., of these paints, coating agents etc.

This invention is now more particularly described by the following examples.

### Example 1

A solution of 2 g of azobisisobutylonitrile in 30 g of styrene, 22 g of γ-methacryloxypropyltrimethoxysilane, 22 g of methyl methacrylate, 15 g of n-butyl methacrylate, 18 g of butyl acrylate, 4 g of acrylamide, 10 g of n-butanol and 2 g of n-dodecylmercaptan was added dropwise to 70 g of xylene, heated to 90°C, and reacted for 10 hours to obtain a silyl group containing vinyl type resin having a molecular weight of 8000.

### Example 2

A solution of 2 g of azobisisobutylonitrile in 30 g of styrene, 22 g of γ-methacryloxypropyltrimethoxysilane, 22 g of methyl methacrylate, 13 g of n-butyl methacrylate, 18 g of butyl acrylate, 2 g of 2-hydroxypropylmethacrylate, 10 g of n-butanol and 4 g of n-dodecylmercaptan was added dropwise to 70 g of xylene, heated to 90°C, and reacted for 10 hours to obtain a silyl group containing vinyl type resin having a molecular weight of 6000.

To the resin solutions obtained in Examples 1 and 2 described above were added the curing agent and solvent set forth in Table 1. The solutions were diluted with n-butyl acetate to the solids concentration (%

by weight) indicated in Table 1, sealed in a tin paint can, and stored at 50°C for 20 days, after which the change in solution viscosity was examined. The results thereof are given in Table 1. The pencil hardness of the 5 day old coating obtained by coating each of said one-pack compositions on a soft steel plate and curing by heating at 60°C for 30 minutes is also set forth in Table 1.

TABLE 1

| Example | Curing Catalyst (pts.b.w. per 100 pts.b.w. of the resin solids in Example) | Solvent (pts.b.w. per 100 pts.b.w. of the resin solids in Example) | Solids Concentration | Solution Viscosity, Pa·s Initial | Solution Viscosity, Pa·s After 20 days at 50°C | Pencil Hardness |
|---|---|---|---|---|---|---|
| 1 | Stann OM*[1] (2) | Methanol (10) | 50 | 0.10 | 0.27 | H |
| | Stann OM (2) | Ethyl silicate (5) | 50 | 0.20 | 0.35 | H |
| | Stann OM (2) | Methanol (10) Methyl orthoformate (2) | 50 | 0.11 | 0.20 | H |
| 2 | Dibutyltin dilaurate (2) | Methyltrimethoxy-silane (5) | 55 | 0.20 | 0.25 | 2H |

*[1] Stabilizer for vinyl chloride polymers (carboxylic acid type tin compound) produced by Sankyo Organic Chemical Co., Ltd.

As described above, it can be seen that the one-pack compositions of this invention have excellent storage stability and at the same time can cure at low temperatures to afford excellent resin coats.

**Claims**

1. A one-pack composition which is curable at low temperatures by atmospheric moisture comprising a mixture of (A) 100 parts by weight of a silyl group containing resin in which the backbone is substantially composed of a vinyl polymer chain and which contains at least one silicon atom attached to a hydrolyzable group at a terminal or in a side chain of its molecule; (B) 0.1 to 10 parts by weight of a curing catalyst; and (C) a solvent; characterized in that said curing catalyst is selected from a carboxylic acid type organic tin compound, a mercaptide type organic tin compound having an Sn—S bond and a sulfide type organic tin compound having an Sn=S bond; said solvent comprises a hydrolyzable ester and/or an alkyl alcohol; and said silyl group-containing resin (A) has a molecular weight of between 1,000 and 30,000 and contains an ethylenically unsaturated organic monomer containing active hydrogen as a copolymerization component.

2. The composition according to claim 1 wherein the hydrolyzable group attached to the silicon atom contained in the silyl group containing polymer (A) is an alkoxy group.

**Patentansprüche**

1. Einzelpackungs-Zusammensetzung, die bei niedrigen Temperaturen durch Luftfeuchtigkeit härtbar ist, umfassend ein Gemisch aus (A) 100 Gew.-Teilen eines Silylgruppen enthaltenden Harzes, in dem das Gerüst im wesentlichen aus einer Vinyl-Polymerisatkette besteht, und das mindestens ein Siliciumatom an eine hydrolysierbare Gruppe am Ende oder in einer Seitenkette des Moleküls enthält, (B) 0,1 bis 10 Gew.-Teile eines Härtungskatalysators, und (C) ein Lösungsmittel, dadurch gekennzeichnet, daß der Härtungskatalysator eine organische Zinnverbindung vom Carbonsäure-Typ, eine organische Zinnverbindung vom Mercaptid-Typ mit einer Sn—S-Bindung oder eine organische Zinnverbindung vom Sulfid-Typ mit einer Sn=S-Bindung ist, das Lösungsmittel einen hydrolysierbaren Ester und/oder einen Alkylalkohol umfaßt, und das Silylgruppen enthaltende Harz (A) ein Molekulargewicht zwischen 1000 und 30 000 aufweist und ein aktive Wasserstoffatome enthaltendes äthylenisch ungesättigtes organisches Monomere als Copolymerisationskomponente enthält.

2. Zusammensetzung nach Anspruch 1, wobei die an das Siliciumatom, das in dem die Silylgruppe enthaltenden Polymerisat (A) enthalten ist, gebundene hydrolysierbare Gruppe eine Alkoxygruppe ist.

**Revendications**

1. Composition à un seul emballage qui est durcissable aux basses températures par l'humidité atmosphérique, comprenant un mélange (A) de 100 parties en poids d'une résine contenant un groupe silyle dans laquelle le tronc est essentiellement formé d'une chaîne de polymère vinylique et qui contient au moins un atome de silicium fixé à un groupe hydrolysable en une chaîne terminale ou dans une chaîne latérale de sa molécule, (B) de 0,1 à 10 parties en poids d'un catalyseur de durcissement et (C) d'un solvant, caractérisée en ce que le catalyseur de durcissement est choisi parmi les composés d'étain organiques du type acide carboxylique, les composés d'étain organiques du type mercaptide comportant une liaison Sn—S et les composés d'étain organiques du type sulfure comportant un liaison Sn=S, le solvant comprend un ester hydrolysable et/ou un alcool alkylique et la résine contenant un groupe silyle (A) a un poids moléculaire se situant entre 1000 et 30.000 et contient un monomère organique éthyléniquement insaturé contenant de l'hydrogène actif comme composant de copolymérisation.

2. Composition suivant la revendication 1, caractérisée en ce que le groupe hydrolysable fixé à l'atome de silicium contenu dans le polymère contenant un groupe silyle (A) est un groupe alcoxy.